# EUROPÄISCHE PATENTANMELDUNG

(11) **EP 2 239 489 A1**
(43) Veröffentlichungstag der Anmeldung: **13.10.2010**
(21) Anmeldenummer: 10159455.4
(22) Anmeldetag: 09.04.2010
(51) Int. Cl.: F16L 19/00, F16L 19/02, F16L 25/00

(54) **Leitungssystem zum Transport einer Flüssigkeit**

(30) Priorität: 09.04.2009 DE 102009016820; 07.09.2009 DE 202009012060 U
(71) Anmelder: Baumann GmbH, 89081 Ulm (DE)
(72) Erfinder:
(74) Vertreter: Schmid, Wolfgang

(57) **Zusammenfassung**

Ein Leitungssystem (4) zum Transport einer Flüssigkeit von einem Wärmeerzeuger zu einem Nutzer, insbesondere zur Verlegung im Erdreich, weist ein Hüllrohr (8) auf, in dem wenigstens eine Flüssigkeitstransportleitung (9,10) aufgenommen ist. An wenigstens einem der Enden des Hüllrohrs (8) ist eine Lagerungsvorrichtung (16) angeordnet, welche ein in dem Hüllrohr (8) angeordnetes, aus einem verformbaren Material bestehendes, wenigstens eine Bohrung (20) zur Aufnahme der Flüssigkeitstransportleitung (9,10) aufweisendes Dichtelement (17) aufweist, welches durch Aufbringen einer Kraft derart verformbar ist, dass das Dichtelement (17) mit seinem Außenumfang (18) an der Innenwandung (19) des Hüllrohrs (8) und im Bereich der wenigstens einen Bohrung (20) an dem Außenumfang der Flüssigkeitstransportleitung (9,10) kraftschlüssig und/oder dichtend anliegt.

## Beschreibung

Die Erfindung betrifft ein Leitungssystem zum Transport einer Flüssigkeit von einem Wärmeerzeuger zu einem Nutzer, insbesondere zur Verlegung im Erdreich, nach der im Oberbegriff von Anspruch 1 näher definierten Art.

Im Zuge der Einsparung von Energie und dem Abkommen von Öl als Energieträger wurden insbesondere im Bereich der Heizungstechnik neue Technologien geschaffen. Unter anderem sind dabei Solarkollektoren und Wärmepumpen zu nennen. In jüngster Zeit werden solche Wärmeerzeugungsanlagen auch zunehmend auf dem Boden neben einem Wohnhaus angeordnet, beispielsweise bei sogenannten Luftwärmepumpen. Ein Trend geht jedoch auch zu Holzheizkesseln, die teilweise ebenfalls im Außenbereich oder auch in einem sich neben dem Wohnhaus befindlichen Gebäude, wie z. B. einer Garage, angeordnet sein können.

Um die in diesen Wärmeerzeugern produzierte Wärme innerhalb des Hauses zu nutzen, muss der Wärmeerzeuger über ein Leitungssystem mit dem Nutzer, wie z. B. einer Heizungsanlage, verbunden werden. Da die oberirdische Verlegung derartiger Leitungen meist eine große Störung darstellen würde, werden diese Leitungen zum überwiegenden Teil unterirdisch, d. h. im Erdreich, verlegt. Meist weist das Leitungssystem zwei Flüssigkeitstransportleitungen auf, nämlich eine Vor- und eine Rücklaufleitung. Diese sind in einem sogenannten Hüllrohr angeordnet, in dem auch eine Strom- und/oder eine Signalleitung aufgenommen sein kann. Meist sind die einzelnen Leitungen mittels mehrerer, in Längsrichtung innerhalb des Hüllrohrs verlaufender Dichtelemente gegeneinander abgedichtet oder auch mittels eines geeigneten Schaums vollständig ausgeschäumt, so dass das gesamte Hüllrohr mit den sich darin befindlichen Leitungen nur sehr schlecht transportiert werden kann, da die Spirale, zu der das Rohr beim Transport aufgewickelt wird, einen Durchmesser von 2 m und mehr aufweist. Diese mangelnde Flexibilität des Hüllrohrs führt auch bei der Verlegung desselben zu Problemen, da beim Verlegen des Hüllrohrs im Erdreich ein bestimmter, meist sehr großer Radius eingehalten werden muss, wodurch sich für die gegenseitige Positionierung des Wärmeerzeugers und des Nutzers erhebliche Einschränkungen ergeben.

Ein größeres Problem ergibt sich außerdem durch die wechselnden Temperaturen der die Flüssigkeitstransportleitungen durchströmenden Flüssigkeit, da im ungenutzten Zustand, also wenn keine Flüssigkeit durch das Leitungssystem strömt, eine Temperatur im Bereich von 0 bis 10°C herrscht, während es im Betrieb des Wärmeerzeugers zu Temperaturen von -30°C bis zu 100°C und mehr kommen kann. Da die Leitungen ohne sich darin befindliche Flüssigkeit verlegt werden und erst während des späteren Betriebs die genannten hohen Temperaturen auftreten, kommt es aufgrund der Druck- bzw. Temperaturdifferenz zu einer erheblichen Ausdehnung der Leitung, die bei einer Länge der Flüssigkeitstransportleitung von 10 m bis zu 40 cm betragen kann. Durch diese Längenänderung der Flüssigkeitstransportleitung entstehen sehr hohe Kräfte, die sogar zu Beschädigungen an den Anschlüssen des Wärmeerzeugers und/ oder des Nutzers führen können, wenn sie nicht in geeigneter Weise aufgenommen werden. Aus dem Stand der Technik sind keine geeigneten Lösungen bekannt, mit denen die oben beschriebene Problematik beseitigt werden kann.

Es ist daher Aufgabe der vorliegenden Erfindung, ein Leitungssystem zum Transport einer Flüssigkeit von einem Wärmeerzeuger zu einem Nutzer, insbesondere zur Verlegung im Erdreich, zu schaffen, welches in der Lage ist, die sich aufgrund einer Ausdehnung ergebende Längenänderung der Flüssigkeitstransportleitung in geeigneter Weise aufzunehmen.

Erfindungsgemäß wird diese Aufgabe durch die in Anspruch 1 genannten Merkmale gelöst.

Durch die erfindungsgemäße Lösung mit der erheblich flexibleren Flüssigkeitstransportleitung kann zum Einen das die wenigstens eine Flüssigkeitstransportleitung aufnehmende Hüllrohr mit einem sehr viel geringeren Radius gewickelt werden, so dass das erfindungsgemäße Leitungssystem einfacher transportiert und flexibler verlegt werden kann. Insbesondere lassen sich auf diese Art und Weise bestimmte räumliche Anordnungen des Wärmeerzeugers relativ zu dem Nutzer sehr viel einfacher als bislang überbrücken.

Zum Anderen ergibt sich durch die erfindungsgemäße wenigstens eine Lagerungsvorrichtung eine Fixierung der wenigstens einen Flüssigkeitstransportleitung, so dass diese auch bei einer durch eine Ausdehnung hervorgerufenen Längenänderung nicht aus dem Ende des Hüllrohrs austreten und möglicherweise Anschlüsse des Wärmeerzeugers und/oder des Nutzers beschädigen kann. Vielmehr krümmt sich die Flüssigkeitstransportleitung innerhalb des Hüllrohrs und kompensiert auf diese Weise die aufgrund der Ausdehnung der Leitung entstehende Längenänderung. Es wird also durch die erfindungsgemäße Lagerungsvorrichtung an zumindest einem Ende des Hüllrohrs ein Fixlager für die wenigstens eine Flüssigkeitstransportleitung geschaffen.

Schließlich ergibt sich durch das Dichtelement der erfindungsgemäßen Lagerungsvorrichtung eine zuverlässige Abdichtung des Hüllrohrs, so dass ein Luftaustausch zwischen dem Inneren des Hüllrohrs und der Umgebung verhindert wird. Dadurch kann auch der Eintrag von Feuchtigkeit in das Hüllrohr und eine sich dadurch ergebende Kondensation vermieden werden.

Eine vollständige Abdichtung des Hüllrohrs ergibt sich, wenn in einer vorteilhaften Weiterbildung der Erfindung an beiden Enden des Hüllrohrs eine jeweilige Lagerungsvorrichtung angeordnet ist.

Um auch größere Bauteile, wie beispielsweise Stecker oder dergleichen, durch das Dichtelement des erfindungsgemäßen Leitungssystems führen zu können, kann in einer sehr vorteilhaften Weiterbildung der Erfindung vorgesehen sein, dass das Dichtelement eine sich in Längsrichtung durch dasselbe erstreckende Aussparung aufweist, in welche ein Dichteinsatz passgenau eingesetzt ist.

Eine sehr einfache Möglichkeit zur Verformung des Dichtelements ergibt sich, wenn beiderseits des Dichtelements aus einem starren Material bestehende Platten angeordnet sind, und insbesondere wenn die Platten mittels mehrerer Schraubverbindungen miteinander verbunden sind.

Um die durch das Dichtelement auf das Hüllrohr aufgebrachten Kräfte aufnehmen zu können und eine Beschädigung des Hüllrohrs zu vermeiden, kann des weiteren vorgesehen sein, dass am Außenumfang des Hüllrohrs wenigstens ein Versteifungsring angeordnet ist, der beispielsweise aus wenigstens zwei Teilen bestehen kann, gegebenenfalls aber auch einteilig ausgeführt sein kann.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine sehr schematische Darstellung des erfindungsgemäßen Leitungssystems zur Verbindung eines Wärmeerzeugers mit einem Nutzer;
- Fig. 2: eine perspektivische Darstellung eines der Enden des Hüllrohrs des erfindungsgemäßen Leitungssystems mit einer Lagerungsvorrichtung;
- Fig. 3: eine Seitenansicht des Hüllrohrs mit einer Lagerungsvorrichtung;
- Fig. 4: eine Vorderansicht des Hüllrohrs gemäß dem Pfeil IV aus Fig. 3 mit einer Lagerungsvorrichtung;
- Fig. 5: einen Schnitt nach der Linie V-V aus Fig. 4;
- Fig. 6: einen Schnitt nach der Linie VI-VI aus Fig. 4;
- Fig. 7: eine Detailansicht einer alternativen Ausführungsform der Lagerungsvorrichtung;
- Fig. 8: einen Schnitt nach der Linie VIII-VIII aus Fig. 3.
- Fig. 9: eine perspektivische Ansicht einer alternativen Ausführungsform des Dichtelements der erfindungsgemäßen Lagerungsvorrichtung;
- Fig. 10: eine Vorderansicht des Dichtelements aus Fig. 9;
- Fig. 11: eine Seitenansicht des Dichtelements gemäß dem Pfeil XI aus Fig. 10;
- Fig. 12: eine perspektivische Ansicht eines Dichteinsatzes für das erfindungsgemäße Dichtelement.
- Fig. 13: eine alternative Ausführungsform eines Versteifungsrings für das Hüllrohr;
- Fig. 14: eine perspektivische Ansicht des Versteifungsrings aus Fig. 13;
- Fig. 15: eine Ansicht gemäß der Linie XV aus Fig. 13;
- Fig. 16: eine perspektivische Ansicht einer alternativen Ausführungsform des Hüllrohrs mit einer Lagerungsvorrichtung;
- Fig. 17: eine alternative Ausführungsform des Versteifungsrings für das Hüllrohr aus Fig. 16;
- Fig. 18: eine perspektivische Ansicht des Versteifungsrings aus Fig. 17;
- Fig. 19: eine vergrößerte Darstellung nach der Linie XIX aus Fig. 17;
- Fig. 20: eine vergrößerte Darstellung nach der Linie XX aus Fig. 17;
- Fig. 21: eine perspektivische Ansicht einer weiteren alternativen Ausführungsform des Dichtelements;
- Fig. 22: eine Seitenansicht des Dichtelements aus Fig. 21;
- Fig. 23: eine perspektivische Ansicht einer in der Ausführungsform von Fig. 21 und Fig. 22 eingesetzten Stützplatte;
- Fig. 24: eine perspektivische Ansicht einer alternativen Ausführungsform einer Schraube für die Schraubverbindung zur Verbindung der Platten des Dichtelements;
- Fig. 25: eine Seitenansicht der Schraube aus Fig. 24;
- Fig. 26: eine Ansicht der Schraube gemäß dem Pfeil XXVI aus Fig. 25; und
- Fig. 27: eine Ansicht einer inneren Platte der Lagerungsvorrichtung.

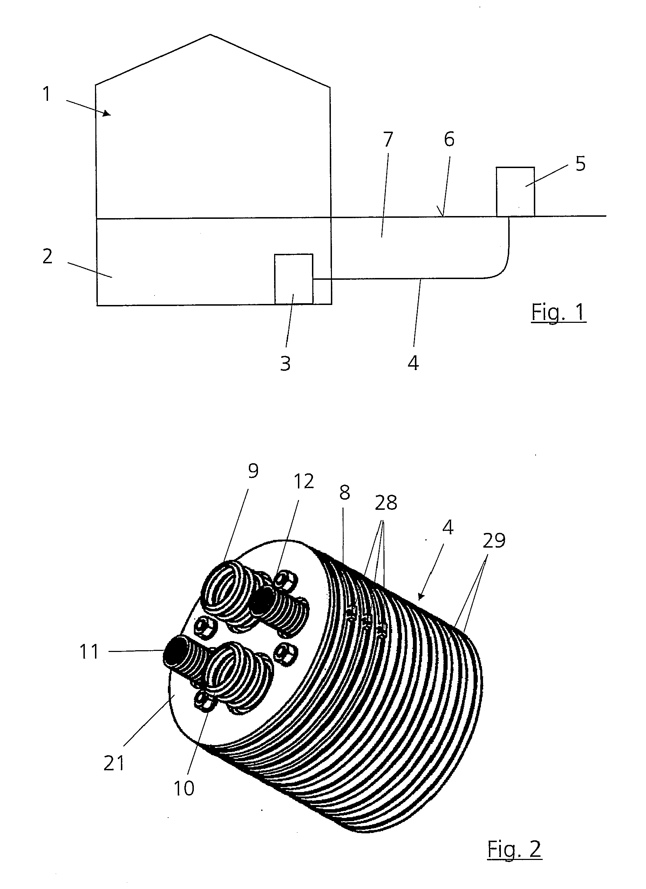

Fig. 1 zeigt ein Gebäude 1, welches unter anderem einen Keller 2 aufweist. Innerhalb des Kellers 2 befindet sich ein Nutzer 3, im vorliegenden Fall in Form einer Heizungsanlage, welcher über ein Leitungssystem 4 mit einem Wärmeerzeuger 5, im vorliegenden Fall einer Luftwärmepumpe oder einem Luftwärmetauscher, verbunden ist. Der Begriff "Wärmeerzeuger", wie er hierin verwendet wird, umfasst auch Einrichtungen zur Kälteerzeugung sowie Wärmetauscher und ähnliche Einrichtungen zur Erzeugung und Umwandlung von Energie. Das Leitungssystem 4 dient zum Transport einer Flüssigkeit, wie beispielsweise Wasser oder Sole, von dem Wärmeerzeuger 5 zu dem Nutzer 3 und umgekehrt und ist unterhalb eines Bodens 6, also im Erdreich 7, verlegt.

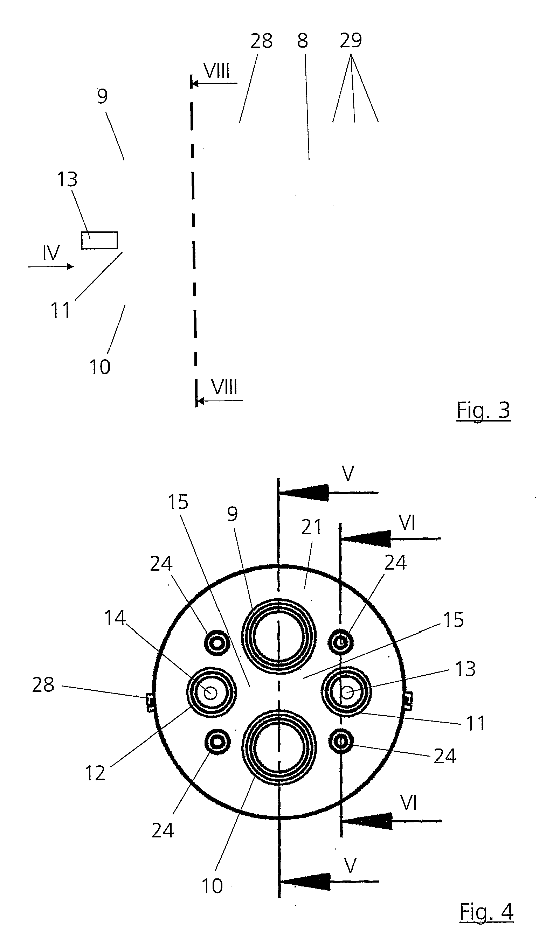

Der Aufbau des Leitungssystems 4 ist in den Figuren 2 bis 8 detaillierter dargestellt. Aus der perspektivischen Darstellung gemäß Fig. 2, in der ein Ende des Leitungssystems 4 dargestellt ist, also beispielsweise das dem Nutzer 3 oder dem Wärmeerzeuger 5 zugewandte Ende, geht hervor, dass das Leitungssystem 4 ein vorzugsweise aus einem flexiblen Material, wie z. B. Kunststoff, bestehendes Hüllrohr 8 aufweist, das vorzugsweise über die gesamte Länge zwischen dem Nutzer 3 und dem Wärmeerzeuger 5 verläuft und in dem mehrere, nachfolgend näher beschriebene Leitungen aufgenommen sind. So befinden sich innerhalb des Hüllrohrs 8 im vorliegenden Fall zwei Flüssigkeitstransportleitungen 9 und 10, von denen eine als Vorlaufleitung und die andere als Rücklaufleitung ausgebildet ist und die zum Transport der die in dem Wärmeerzeuger 5 erzeugten Wärme transportierenden Flüssigkeit dienen. Des weiteren befinden sich innerhalb des Hüllrohrs 8 im vorliegenden Fall zwei Leerrohre 11 und 12, die zur Aufnahme einer oder mehreren in den Figuren 3 und 4 erkennbaren Stromleitungen 13 und einer oder mehreren lediglich in Fig. 4 dargestellten Signalleitungen 14 dienen. Die Flüssigkeitstransportleitungen 9 und 10 können von einer geeigneten Isolierung umgeben sein, die in den Figuren jedoch nicht dargestellt ist.

Die Flüssigkeitstransportleitungen 9 und 10 bestehen aus einem flexiblen Material, welches in der Lage ist, durch Verformung eine temperaturbedingte Ausdehnung von mindestens 0,5 bis 4 cm pro Meter der Flüssigkeitstransportleitung 9 bzw. 10 aufzunehmen. Dieser Wert hängt unter anderem von der Temperatur, dem Druck und dem Material der Flüssigkeitstransportleitungen 9 und 10 ab. Im vorliegenden Fall sind die beiden Flüssigkeitstransportleitungen 9 und 10 hierzu als jeweilige Wellrohre ausgebildet, die vorzugsweise aus Edelstahl oder einer Kupfer- oder Aluminiumlegierung bestehen. Gegebenenfalls könnten jedoch auch andere Materialien zur Bildung der als Wellrohr ausgebildeten Flüssigkeitstransportleitungen 9 und 10 dienen, wie zum Beispiel geeignete Kunststoffe oder Stähle, die gegebenenfalls mit geeigneten Beschichtungen versehen sind. Es ist nicht zwingend erforderlich, dass es sich bei den Flüssigkeitstransportleitungen um Wellrohre handelt, vielmehr könnten auch glattwandige Rohre eingesetzt werden, welche jedoch einen höheren Biegewiderstand als Wellrohre aufweisen. Ein Wellrohr ist jedoch sehr flexibel und kann die durch die Ausdehnung der Flüssigkeitstransportleitungen 9 und 10 bedingte Längenänderung sehr gut aufnehmen und innerhalb des Hüllrohrs kompensieren. Des weiteren wäre es prinzipiell auch möglich, andere Querschnitte bzw. Ausführungsformen für die Flüssigkeitstransportleitungen 9 und 10 aufzunehmen, wenn dadurch eine ausreichende Flexibilität derselben gewährleistet wäre, um die genannte, durch die unterschiedliche Temperatur der die Flüssigkeitstransportleitungen 9 und 10 durchströmenden Flüssigkeit hervorgerufene Ausdehnung aufnehmen zu können. Wie aus den Figuren 4, 5 und 6 hervorgeht, sind die Zwischenräume zwischen den Flüssigkeitstransportleitungen 9 und 10 sowie den Leerrohren 11 und 12 nicht mit Dichtmaterial ausgefüllt oder gar ausgeschäumt, so dass sich innerhalb des Hüllrohrs 8 mehrere Hohlräume 15 ergeben, die eine Ausdehnung der Flüssigkeitstransportleitungen 9 und 10 innerhalb des Hüllrohrs 8 ermöglichen, da sich die Flüssigkeitstransportleitungen 9 und 10 innerhalb des Hüllrohrs 8 annähernd beliebig verkrümmen bzw. verbiegen können, ohne dass es zu Behinderungen bei der Ausdehnung der Flüssigkeitstransportleitung kommen kann. Dies hat keinen Einfluss auf die oben erwähnte Möglichkeit einer geeigneten Isolierung für die Flüssigkeitstransportleitungen 9 und 10.

Insbesondere wenn für die Flüssigkeitstransportleitungen Materialien und/oder Rohrquerschnitte bzw. Rohrkonstruktionen mit einem größeren Biegewiderstand eingesetzt werden, wie zum Beispiel glattwandige Kupferrohre, hat es sich als vorteilhaft erwiesen, wenn sich in den Hohlräumen 15 zwischen den Flüssigkeitstransportleitungen 9 und 10 ein nicht dargestelltes Füllmaterial befindet, welches ein Abknicken der Flüssigkeitstransportleitungen 9 und 10 verhindert. Ein solches Füllmaterial kann beispielsweise durch biegsame, aus Vollmaterial geschäumte Schläuche bzw. Rundmaterialien aus Polyethylen gebildet sein, da es sich hierbei um ein Material handelt, welches sehr leicht zu biegen ist und dennoch eine gute Abstützung für die Flüssigkeitstransportleitungen 9 und 10 bietet. Selbstverständlich kommen statt Polyethylen auch andere Materialien in Frage.

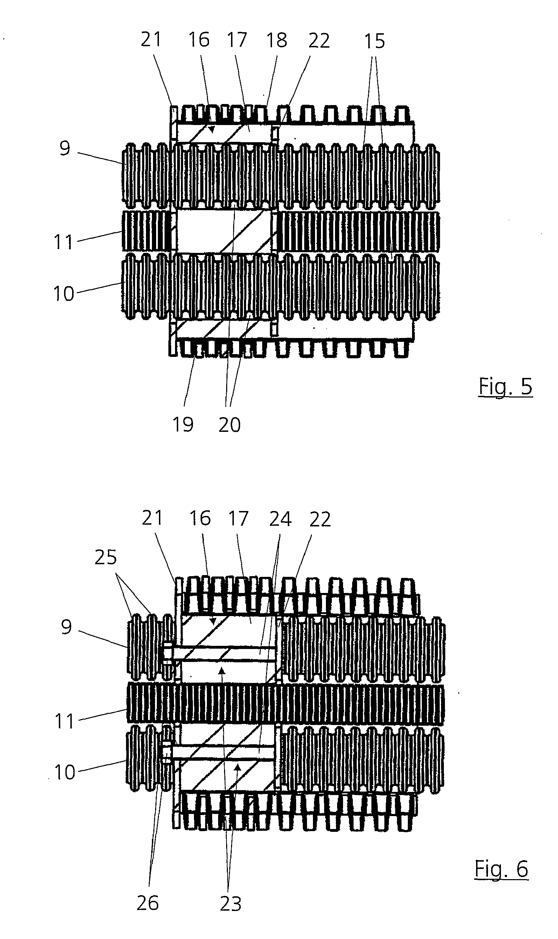

In den Figuren 5 und 6 ist zu erkennen, dass sich an wenigstens einem der Enden des Hüllrohrs 8 eine Lagerungsvorrichtung 16 befindet, welche die Flüssigkeitstransportleitungen 9 und 10 sowie die Leerrohre 11 und 12 wie nachfolgend beschrieben klemmt bzw. fixiert und somit in ihrer Position hält. Vorzugsweise sind an beiden Enden des Hüllrohrs 8 jeweilige Lagerungsvorrichtungen 16 vorgesehen, die identisch ausgebildet sein können. Die Lagerungsvorrichtung 16 weist ein in dem Hüllrohr 8 angeordnetes, aus einem verformbaren Material bestehendes Dichtelement 17 auf, welches durch Aufbringen einer Kraft derart in radialer Richtung verformbar ist, dass das Dichtelement 17 mit seinem Außenumfang 18 an der Innenwandung 19 des Hüllrohrs 8 anliegt. Das Dichtelement 17 besteht hierzu vorzugsweise aus einem Gummi, wie z. B. einem EPDM-Kautschuk. Allerdings sind auch Silikon oder Hochtemperaturkautschuke möglich. Des weiteren weist das Dichtelement 17 mehrere Bohrungen 20 zur Aufnahme der beiden Flüssigkeitstransportleitungen 9 und 10 sowie der Leerrohre 11 und 12 auf. Beim nachfolgend detaillierter beschriebenen Verformen des Dichtelements 17 liegt dasselbe nicht nur an der Innenwandung 19 des Hüllrohrs 8, sondern auch an dem jeweiligen Außenumfang der Flüssigkeitstransportleitungen 9 und 10 sowie der Leerrohre 11 und 12 dichtend und kraftschlüssig an, so dass sich durch das Dichtelement 17 eine vollständige Abdichtung des jeweiligen Endes des Hüllrohrs 8 ergibt und die Flüssigkeitstransportleitungen 9 und 10 sowie die Leerrohre 11 und 12 mittels des Dichtelements gehalten sind.

Zur Aufbringung der Kraft auf das Dichtelement 17 zur Verformung desselben sind im vorliegenden Fall beiderseits des Dichtelements 17 jeweilige Platten 21 und 22 angeordnet, die aus einem starren Material, wie z. B. Stahl oder einem anderen geeigneten Material, wie beispielsweise Aluminium, jedoch auch aus einem geeigneten Kunststoff bestehen. Hierbei bildet die eine Platte 21 den äußeren Abschluss des Hüllrohrs 8 und wird daher nachfolgend als äußere Platte 21 bezeichnet, wohingegen sich die andere Platte 22 innerhalb des Hüllrohrs 8 befindet und daher nachfolgend als innere Platte 22 bezeichnet wird. Die beiden Platten 21 und 22 sind in der dargestellten Ausführungsform mittels mehrerer Schraubverbindungen 23 miteinander verbunden, wobei über die Schraubverbindungen 23 eine Kraft in axialer Richtung zur Verformung des Dichtelements 17 in radialer Richtung aufgebracht werden kann.

Bei der Ausführungsform gemäß Fig. 6 weisen die Schraubverbindungen 23 jeweils eine mit der inneren Platte 22 verbundene Schraube 24 auf, welche jeweils durch eine Bohrung 25 in der äußeren Platte 21 durchgeführt ist. Selbstverständlich weist auch das Dichtelement 17 entsprechende, nicht näher bezeichnete Bohrungen zur Durchführung der Schrauben 24 auf. Den anderen Teil der Schraubverbindung 23 bildet eine Mutter 26, die sich auf der der inneren Platte 22 gegenüberliegenden Seite der äußeren Platte 21 befindet und mit der Schraube 24 verschraubt ist. Somit kann durch Anziehen der Muttern 25 auf den Schrauben 24 eine in axialer Richtung wirkende Kraft auf das Dichtelement 17 aufgebracht werden, welche dazu führt, dass sich das Dichtelement 17 verformt, insbesondere in axialer Richtung verkleinert, und in radialer Richtung erweitert, um an dem Hüllrohr 8, den Flüssigkeitstransportleitungen 9 und 10 sowie den Leerrohren 11 und 12 anzuliegen und eine Dichtwirkung gegenüber diesen Bauteilen zu erzeugen. Des weiteren ergibt sich durch das Dichtelement 17 auch eine Fixierung der Flüssigkeitstransportleitungen 9 und 10 innerhalb des Hüllrohrs 8.

Im vorliegenden Fall sind die Schrauben 24 mit der inneren Platte 22 verschweißt, es ist jedoch auch möglich, sogenannte Schlossschrauben einzusetzen, die einen Abschnitt mit einem unrunden Querschnitt aufweisen, welcher in einer zu dem unrunden Querschnitt komplementären Bohrung der inneren Platte 22 untergebracht ist, so dass ein Verdrehen der Schraube 24 verhindert wird. Auch in diesem Fall kann durch Anziehen der Muttern 26 das Dichtelement 17 verformt werden. Durch eine derartige Ausgestaltung mit einem unrunden Querschnitt des Abschnitts der Schraube 24 und der Platte 21 ist eine einfache Herstellung der Platte 22, beispielsweise durch Laserschneiden oder Stanzen, möglich.

Um ein zu starkes Anziehen der Muttern 26 und damit eine mögliche Beschädigung des Dichtelements 17, des Hüllrohrs 8 und/oder der Flüssigkeitstransportleitungen 9 und 10 oder der Leerrohre 11 und 12 zu verhindern, können die Muttern 26 als sogenannte Hutmuttern ausgebildet sein, die nur eine bestimmte Schraublänge zulassen, wodurch sichergestellt ist, dass das Dichtelement 17 nicht zu stark verformt wird.

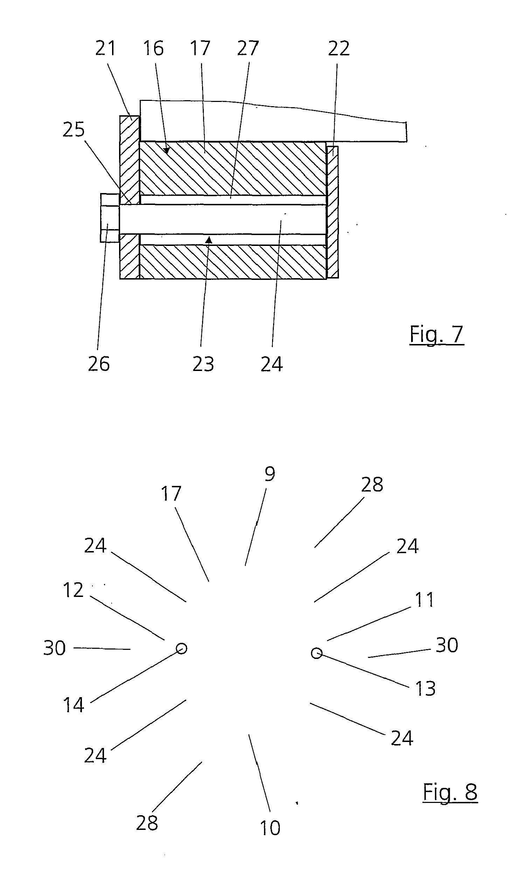

Eine alternative Ausführungsform zu der Verwendung der Hutmuttern ist in Fig. 7 in einer Teilansicht dargestellt. Hierbei sind die Schrauben 24 über einen bestimmten Teil ihrer Länge von einer Hülse 27 umgeben. Dadurch schlagen beim Verschrauben der Mutter 26 mit der Schraube 24 die beiden Platten 21 und 22 an der Hülse 27 an und eine weitere Verschraubung der Mutter 26 gegenüber der Schraube 24 wird verhindert.

Zur Vermeidung zu hoher mittels der Schraubverbindung 23 auf das Dichtelement 17 aufgebrachter Kräfte wäre es auch möglich, ein bestimmtes Anzugsmoment für die Schraubverbindungen 23 festzulegen. Die Höhe der auf das Dichtelement 17 mittels der Schraubverbindung 23 aufgebrachten Kraft hängt selbstverständlich auch von der Anzahl und der Festigkeit der in dem Hüllrohr 8 aufgenommenen Leitungen bzw. Rohre ab und kann über eine Anpassung der Schraubverbindungen 23 eingestellt werden.

Selbstverständlich wäre es auch möglich, die Muttern 26 an der inneren Platte 22 anzuschweißen und die Schrauben 24 durch die Bohrungen 25 in der äußeren Platte 21 hindurch zu der jeweiligen Mutter 26 zu führen und zum Aufbringen der Kraft auf das Dichtelement 17 die Schrauben 24 anzuziehen.

Das Dichtelement 17 und/oder die beiden Platten 21 und/oder 22 können auch mehrteilig ausgeführt sein, beispielsweise um eine Montage zu vereinfachen, sodass auch größere Bauteile durch das Dichtelement 17 und/oder die beiden Platten 21 und/oder 22 hindurchgeführt werden können. Gegebenenfalls können die Platten 21 und/oder 22 hierbei auch mit einem Scharnier versehen sein bzw. das Dichtelement 17 kann nur einseitig bis zu seiner Bohrung 20 oder einer seiner anderen Bohrungen eingeschnitten werden.

Insbesondere die äußere Platte 21 kann auch mit einem größeren Durchmesser in der Art eines Flansches zur Anbindung an einen Gegenflansch oder dergleichen versehen sein.

Um die durch die Verformung des Dichtelements 17, wie oben beschrieben, auf das Hüllrohr 8 aufgebrachten Kräfte aufnehmen zu können, sind am Außenumfang des Hüllrohrs 8 mehrere Versteifungsringe 28 angeordnet, welche, wie aus Fig. 8 hervorgeht, im vorliegenden Fall zweiteilig ausgebildet sind. Gegebenenfalls kann der wenigstens eine Versteigungsring 28 auch einteilig ausgeführt sein und beispielsweise aufgebogen werden, um ihn auf dem Hüllrohr 8 anzubringen. Das Hüllrohr 8 weist mehrere durch die Wellenform der Außenwandung des Hüllrohrs gebildete Nuten 29 auf, in denen die Versteifungsringe 28 aufgenommen sind. Die Anzahl der verwendeten Versteifungsringe 28 hängt dabei von der durch dieselben aufzunehmenden Kraft und der Dicke bzw. Länge des Dichtelements 17 ab, wobei prinzipiell auch lediglich ein Versteifungsring 28 ausreichend sein kann. Die Versteifungsringe 28 sind mit jeweiligen Hinterschneidungen 30 versehen, durch welche die von dem Dichtelement 17 in radialer Richtung aufgebrachte Kraft so von dem Versteifungsring 28 aufgenommen werden, dass der Versteifungsring 28 nicht gelöst werden kann. Vorzugsweise bestehen die Versteifungsringe 28 aus einem starren Material, wie z. B. Stahl.

Statt der Versteifungsringe 28 könnte auch eine nicht dargestellte, das Hüllrohr 8 an seinem Außenumfang umgebende Hülse vorgesehen sein, um die auftretenden Kräfte aufzunehmen.

Zusätzlich zu den Flüssigkeitstransportleitungen 9 und 10 sowie den Leerrohren 11 und 12 mit der Stromleitung 13 und der Signalleitung 14 kann sich innerhalb des Hüllrohrs 8 außerdem eine Kondensatabfuhrleitung zum Abführen von möglicherweise in dem Wärmeerzeuger 5 anfallenden Kondensat befinden. Diese ist jedoch aus Übersichtlichkeitsgründen nicht dargestellt.

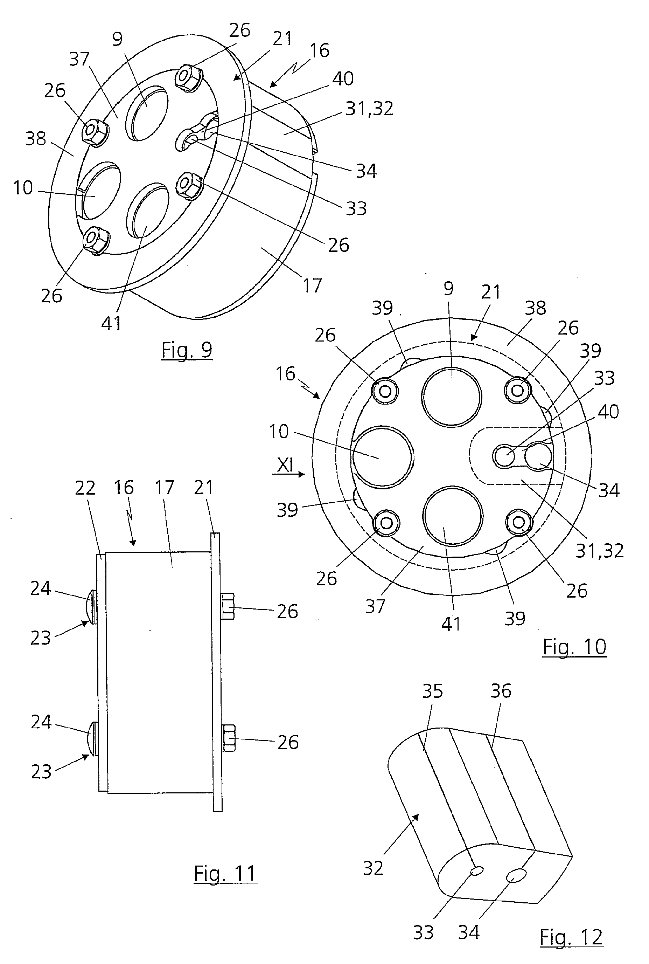

In den Figuren 9 - 12 ist eine alternative Ausführungsform des Dichtelements 17 dargestellt. Dieses weist eine über seine ganze Länge in axialer Richtung bzw. in Längsrichtung durchgehende Ausnehmung 31 auf, die in Fig. 10 mit einer gestrichelten Linie angedeutet ist. Die Ausnehmung 31 dient dazu, dass die Stromleitung 13 und/oder die Signalleitung 14 mit einem gegebenenfalls daran angebrachten Stecker, die durch das Hüllrohr 8 verlegt werden soll, durch das Dichtelement 17 geführt werden kann. Diese Leitungen 13 bzw. 14 müssen, wie zu einem späteren Zeitpunkt näher beschrieben, in das Dichtelement 17 "eingefädelt" werden, wenn die daran angebrachten Stecker zu groß sind, um sie durch die Leerrohre 11 oder 12 hindurchzuführen. Um trotz der Ausnehmung 31 eine ausreichende Dichtheit des Dichtelements 17 zu gewährleisten, ist in die Ausnehmung 31 ein Dichteinsatz 32 wenigstens annähernd passgenau eingesetzt, der in Fig. 12 in einer perspektivischen Darstellung zu erkennen ist. Um die Dichtheit zu optimieren, weist der Dichteinsatz 32 wenigstens annähernd die Form der Ausnehmung 31 auf, was beispielsweise dadurch erreicht werden kann, dass der Dichteinsatz 32 aus dem Dichtelement 17 ausgeschnitten wird, um die Ausnehmung 31 zu erzeugen, und später, wenn die Leitung 14 bzw. 14 mit dem daran angebrachten Stecker durch die Ausnehmung 31 hindurchgeführt wurde, wieder in die Ausnehmung 31 eingesetzt wird.

Zwar wäre es prinzipiell möglich, die Leerrohre 11 bzw. 12 mit einem größeren Durchmesser zu versehen, um den Stecker durch dieselben hindurch führen zu können, dadurch würde sich aber auch der Durchmesser des Hüllrohrs 8 in unerwünschter Weise vergrößern, was durch die Ausnehmung 31 und den Dichteinsatz 32 verhindert wird. Des Weiteren verhindert diese Lösung, dass es erforderlich ist, die Stromleitung 13 oder die Signalleitung 14 abzuschneiden, um den Stecker nach dem Durchführen der Stromleitung 13 bzw. der Signalleitung 14 durch das entsprechende Leerrohr 11 bzw. 12 wieder an der Stromleitung 13 bzw. 14 zu montieren.

Der Dichteinsatz 32 weist im vorliegenden Fall zwei in Längsrichtung desselben verlaufende, über die gesamte Länge des Dichteinsatzes 32 verlaufende Bohrungen 33 und 34 auf, welche mit jeweiligen, über die gesamte Länge des Dichteinsatzes 32 verlaufenden Schlitzen 35 und 36 mit der Außenseite des Dichteinsatzes 32 verbunden sind. Über die Schlitze 35 und 36 können die Stromleitung 13 bzw. die Signalleitung 14 in die Bohrungen 33 und 34 eingeführt bzw. "eingefädelt" werden, ohne dass der Stecker demontiert werden muss. Prinzipiell könnte auch lediglich eine der Bohrungen 34 oder 35 vorgesehen sein. Des weiteren ist es möglich, eine der Bohrungen 34 oder 35 mit einem Stopfen zu verschließen, wenn sie nicht benötigt wird.

Bei der in den Figuren 9 - 12 dargestellten Ausführungsform ist des Weiteren die vordere Platte 21 zweiteilig ausführt und weist eine innere Scheibe bzw. einen Mittelteil 37 und einen den Mittelteil 37 umgebenden Ring 38 auf. Das Mittelteil 37 kann auf diese Weise mit den auch hier vorgesehenen Schraubverbindungen 23 bereits montiert und nachträglich der Ring 38 aufgebracht werden. Hierzu weist der Ring 38 eine der Anzahl der Schraubverbindungen 23 entsprechende Anzahl an Ausnehmungen 39 auf, welche am inneren Umfang des Rings 38 vorgesehen sind und es ermöglichen, dass der Ring 38 über die Muttern 26 der Schraubverbindungen 23 geführt wird. Während in Fig. 9 der Ring 38 in der Position dargestellt ist, in der er über die Muttern 26 geschoben werden kann, ist er in Fig. 10 in seinem verdrehten Zustand dargestellt, in dem er verschoben wurde und sich daher unterhalb der Muttern 26 das Material des Rings 38 befindet. Der Ring 38 bringt somit eine zusätzliche Kraft auf den Dichteinsatz 32 auf, um für eine gute Abdichtung desselben zu sorgen. Durch den Ring 38 wird auch im Bereich des Dichteinsatzes 32 ein Druck auf das Dichtelement 17 ausgeübt. Um einen noch größeren Druck von den Muttern 26 über den Ring 38 auf das Dichtelement 17 und insbesondere den Dichteinsatz 32 aufbringen zu können, können gegebenenfalls unterhalb der Muttern 26 Unterlegscheiben mit einem größeren Durchmesser angeordnet sein.

Der Mittelteil 37 weist des weiteren eine Ausnehmung 40 auf, durch welche die Stromleitung 13 und die Signalleitung 14 durchgeführt werden können. Durch die oben beschriebene zweiteilige Ausführung der Platte 21 mit dem Mittelteil 37 und dem Ring 38 kann darauf verzichtet werden, dass die Ausnehmung 40 bis zu dem Außenumfang der Platte 21 verläuft, da der Ring 38 erst zu einem späteren Zeitpunkt montiert wird, wenn die Stromleitung 13 und die Signalleitung 14, gegebenenfalls mit ihren Steckern, bereits montiert sind. Dadurch wird eine weitere Erhöhung des Drucks auf das Dichtelement 17 erreicht.

Durch die in den Figuren 9 - 12 dargestellte Ausführungsform kann, zumindest auf einer Seite des Hüllrohrs 8, eine Vormontage der Flüssigkeitstransportleitungen 9 und 10 sowie der Leerrohre 11 und gegebenenfalls 12 mit der Stromleitung 13 bzw. der Signalleitung 14 erfolgen. Des weiteren ist dieser Ausführungsform zu entnehmen, dass neben den beiden oben beschriebenen Flüssigkeitstransportleitungen 9 und 10 eine weitere Flüssigkeitstransportleitung 41 vorgesehen ist.

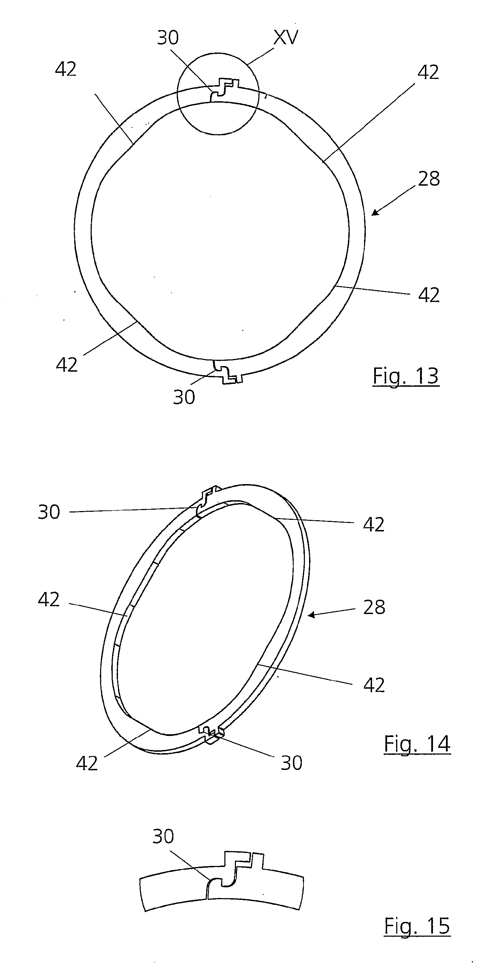

In den Figuren 13 - 15 ist eine alternative Ausführungsform des Versteifungsrings 28 dargestellt. Hierbei ist die innere Kontur des Versteifungsringes 28 nicht kreisförmig ausgeführt. Vielmehr weist der Versteifungsring 28 um seinen inneren Umfang verteilt im vorliegenden Fall vier Verdickungen 42 auf, welche derart ausgeführt sind, dass der Abstand zweier einander gegenüberliegender Verdickungen 42 kleiner ist als der Außendurchmesser der inneren Platte 22. Die Verdickungen 42 sind dafür vorgesehen, im montierten Zustand des Versteifungsrings 28 auf den äußeren Umfang des Hüllrohrs 8 zu drücken und damit für eine bessere Abdichtung des inneren Umfangs des Hüllrohrs 8 gegenüber dem Dichtelement 17 zu sorgen. Selbstverständlich könnte auch eine andere Anzahl an Verdickungen 42 vorgesehen sein, wobei eine größere Anzahl an Verdickungen 42 für einen stabileren Sitz des Versteifungsrings 28 auf dem Hüllrohr 8 sorgt. Die Verdickungen 42 des Versteifungsrings 28 bewirken außerdem, dass die innere Platte 22 nicht aus dem Hüllrohr 8 gezogen werden kann. Dadurch kann möglicherweise die Dicke des Dichtelements 17, also die Erstreckung desselben in Achsrichtung, verringert werden. Des weiteren ist auf diese Weise der Einsatz einer geringeren Anzahl an Versteifungsringen 28 am Außenumfang des Hüllrohrs 8 möglich.

In Fig. 15 ist die Verbindung der beiden Einzelteile des auch in diesem Fall zweiteilig ausgeführten Versteifungsrings 28 mit den Hinterschneidungen 30 nochmals detaillierter dargestellt.

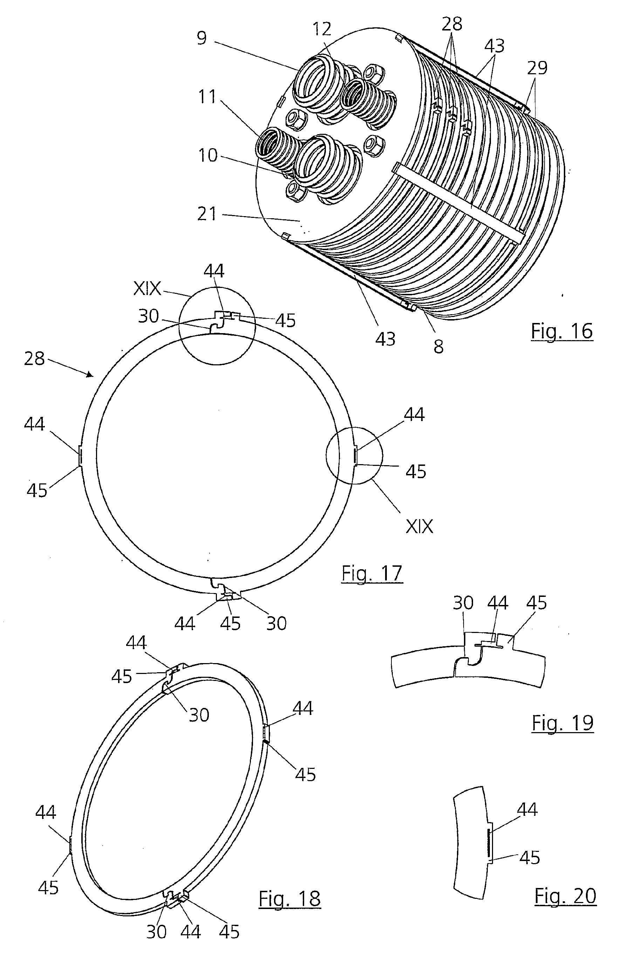

Fig. 16 zeigt eine alternative Ausführungsform des Hüllrohrs. Da die Flüssigkeitstransportleitungen 9, 10 und gegebenenfalls 41 im Betrieb sehr hohe Temperaturen erreichen können und sich dadurch ihre Länge erheblich ändern kann, werden insbesondere auf die äußere Platte 21 sehr hohe Kräfte aufgebracht. Des weiteren verringert sich durch die sich aufgrund der Wärmeleitung ergebenden Erwärmung der Lagerungsvorrichtung 16 und damit des Hüllrohrs 8 die Festigkeit des Hüllrohrs 8, wodurch im vorderen, die Lagerungsvorrichtung 16 umgebenden Bereich des Hüllrohrs 8 geringere Kräfte übertragen werden können als in einem von der Lagerungsvorrichtung 16 entfernten Bereich des Hüllrohrs 8. Um dennoch ausreichend hohe Kräfte aufnehmen zu können, ist bei der Ausführungsform des Hüllrohrs 8 gemäß Fig. 16 in einem von der äußeren Platte 21 bzw. der Lagerungsvorrichtung 16 entfernten Bereich ein weiterer Versteifungsring 28 vorgesehen, der als Abstützung für ein Verbindungselement 43 dient, von denen im vorliegenden Fall um den Umfang des Hüllrohrs 8 verteilt insgesamt vier vorgesehen sind. An der gegenüberliegenden Seite der Anbringung des Verbindungselements 43 an dem Versteifungsring 28 sind die Verbindungselemente 43 an der äußeren Platte 21 angebracht. Die Verbindungselemente 43 können beispielsweise in der Art von Kabelbindern ausgeführt sein, wobei sie sowohl aus Metall als auch Kunststoff bestehen können.

Statt der Ausführung als Kabelbinder oder ähnliches könnten auch Gewindestangen oder andere geeignete Einrichtungen für die Verbindungselemente 43 verwendet werden. Des weiteren wäre es auch möglich, einen im Bereich der vorderen Platte 21 angeordneten Versteifungsring 28 mit einem in dem hinteren bzw. mittleren Bereich des Hüllrohrs 8 vorgesehnen Versteifungsring 28 mittels der Verbindungselemente 43 zu verbinden. Da die Verbindungselemente 43 für eine Verspannung des Hüllrohrs 8 sorgen, können sie auch als Spannelemente oder Verspannungselemente bezeichnet werden.

In den Figuren 17 - 20 ist eine Ausführungsform des Versteifungsrings 28 dargestellt, der insbesondere für den Einsatz mit den Verbindungselementen 43 ausgebildet ist. Dieser Versteifungsring 28 ist mit im vorliegenden Fall vier um seinen Umfang verteilten Schlitzen 44 versehen, durch welche die Verbindungselemente 43 geführt werden können. Zwei der Schlitze 44 sind dabei in Ansätzen 45 am äußeren Umfang des Versteifungsrings 28 angeordnet und zwei weitere Schlitze 44 befinden sich in dem Bereich, in dem die beiden Hälften des Versteifungsrings 28 miteinander verbunden sind, also in dem Bereich der Hinterschneidungen 30. Die Figuren 19 und 20 zeigen die Anordnung der Schlitze 44 an dem Versteifungsring 28 in einer vergrößerten Darstellung.

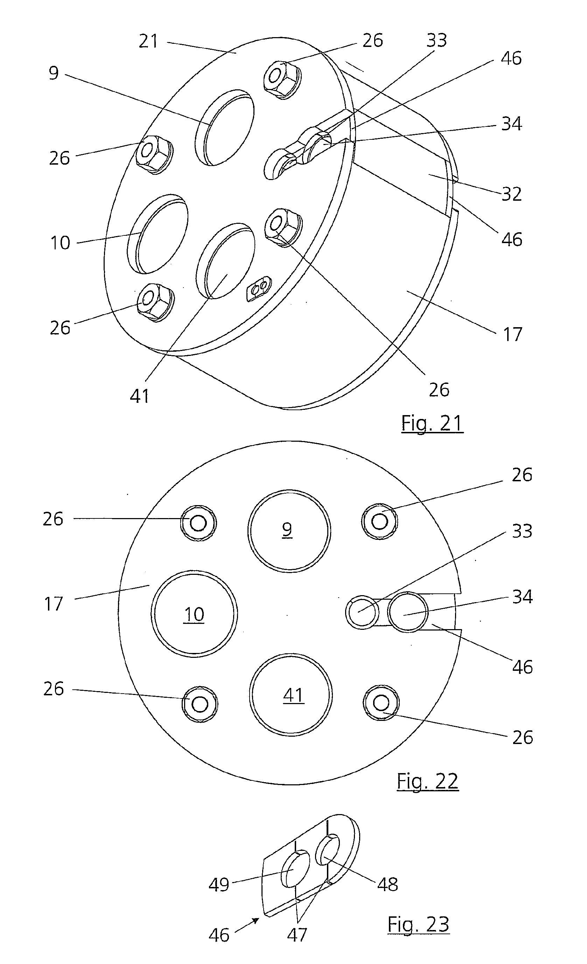

Eine alternative Ausführungsform der Lagerungsvorrichtung 16 mit einem geänderten Dichtelement 17 zeigen die Figuren 21 - 23. Hierbei ist ebenfalls der Dichteinsatz 32 vorgesehen, dieser weist jedoch eine geringere Länge als der Dichteinsatz 32 gemäß der Ausführungsform der Figuren 9 - 12 auf. Um den Dichteinsatz 32 in axialer Richtung abzustützen, sind zwei vorzugsweise aus Edelstahl bestehende Platten 46 an beiden Seiten des Dichtansatzes 32 angeordnet. Dadurch kann auf die zweiteilige Ausführung der Platte 21 mit dem Mittelteil 37 und dem Ring 38 verzichtet werden. Die Platten 46 sind, wie aus Fig. 23 hervorgeht, mit zwei Schlitzen 47 versehen und können dadurch aufgebogen werden, um Leitungen oder dergleichen, welche in den Bohrungen 33 und 34 des Dichteinsatzes 32 untergebracht werden sollen, über dieselben in Bohrungen 48 und 49 der Platten 46 einführen zu können.

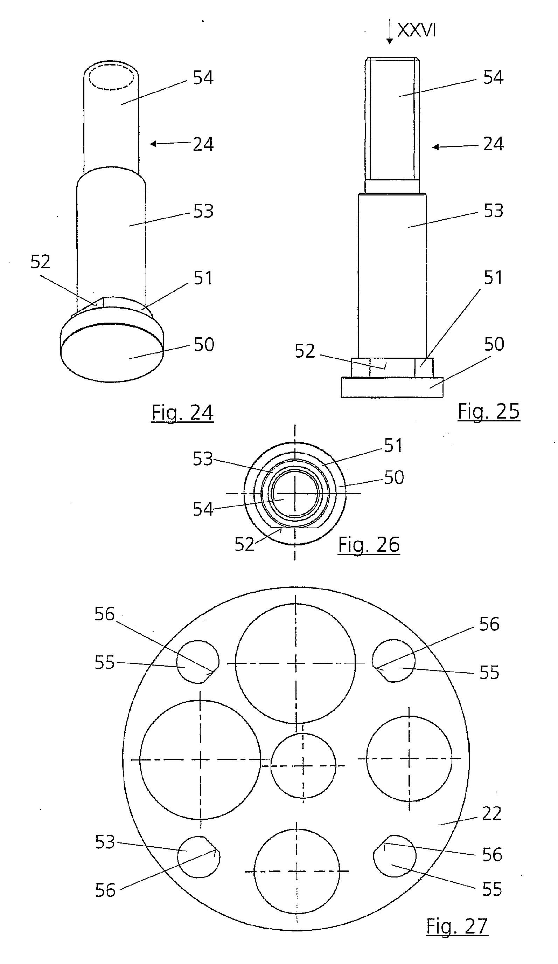

Eine Alternative zu der in Fig. 7 dargestellten Schraubverbindung 23 ist in den Figuren 24 - 26 dargestellt. Die hierbei verwendete, in Fig. 24 in einer perspektivischen Darstellung gezeigte Schraube 24 weist einen sich an ihren Schraubenkopf 50 anschließenden Abschnitt 51 auf, der mit einer Abflachung 52 versehen ist, welche den unrunden Querschnitt der Schraube 24 bildet, auf den bereits oben Bezug genommen wurde. Durch die Abflachung 52 an dem Abschnitt 51 kann auf das oben beschriebene Verschweißen verzichtet werden. An den Abschnitt 51 mit der Abflachung 52 schließt sich ein weiterer, in diesem Fall zylindrischer Abschnitt 53 an, dessen Durchmesser derart gewählt ist, dass er eine zur Durchführung der Schraube 24 dienende Bohrung des Dichtelements 17 zumindest im montierten Zustand vollständig ausfüllt, d. h. dass er an der gesamten Wandung dieser Bohrung anliegt. Da das Dichtelement 17 beim Verschrauben der beiden Platten 21 und 22 verpresst wird, kann der Abschnitt 53 auch einen derartigen Durchmesser aufweisen, dass dieses dichtende Anliegen erst im montierten Zustand stattfindet. An den Abschnitt 53 schließt sich ein Gewindeabschnitt 54 der Schraube 24 an, an dem eine Mutter angebracht werden kann. Die Länge des Abschnitts 53 bestimmt dabei den minimal möglichen Abstand der beiden Platten 21 und 22, da die Platte 22 beim vollständigen Anziehen der in diesem Fall nicht dargestellten Mutter an der dem Gewindeabschnitt 54 zugewandten Schulter des Abschnitts 53 anliegt. Dadurch wird eine Beschädigung des Dichtelements 17 verhindert.

In Fig. 27 ist die Platte 22 in einer zu der Schraube 24 gemäß der Ausführungsform der Figuren 24 - 26 passenden Ausgestaltung dargestellt. Neben den bereits zuvor beschriebenen Bohrungen zur Durchführung der Flüssigkeitstransportleitungen 9 und 10 sowie der anderen oben beschriebenen Bauteile weist die innere Platte 22 mehrere Bohrungen 55 auf, die mit den Bohrungen 25 der äußeren Platte 21 korrespondieren und jeweilige Abflachungen 56 aufweisen, an welchen die Abflachungen 52 der Schrauben 24 anliegen, um ein Verdrehen der Schrauben 24 gegenüber der Platte 22 zu verhindern. Prinzipiell könnten statt der Platten 21 und 22 auch Elemente vorgesehen sein, die nur an einem Außenumfang des Dichtelements 17 verlaufen.

## Patentansprüche

1. Leitungssystem (4) zum Transport einer Flüssigkeit von einem Wärmeerzeuger zu einem Nutzer, insbesondere zur Verlegung im Erdreich, mit einem Hüllrohr (8), in dem wenigstens eine Flüssigkeitstransportleitung (9,10) aufgenommen ist,
**dadurch gekennzeichnet, dass**
an wenigstens einem der Enden des Hüllrohrs (8) eine Lagerungsvorrichtung (16) angeordnet ist, welche ein in dem Hüllrohr (8) angeordnetes, aus einem verformbaren Material bestehendes, wenigstens eine Bohrung (20) zur Aufnahme der Flüssigkeitstransportleitung (9,10) aufweisendes Dichtelement (17) aufweist, welches durch Aufbringen einer Kraft derart verformbar ist, dass das Dichtelement (17) mit seinem Außenumfang (18) an der Innenwandung (19) des Hüllrohrs (8) und im Bereich der wenigstens einen Bohrung (20) an dem Außenumfang der Flüssigkeitstransportleitung (9,10) kraftschlüssig und/oder dichtend anliegt.

2. Leitungssystem nach Anspruch 1,
**dadurch gekennzeichnet, dass**
die wenigstens eine Flüssigkeitstransportleitung (9,10) aus einem flexiblen Material besteht, welches in der Lage ist, durch Verformung eine temperaturbedingte Ausdehnung von mindestens 0,5 - 4 cm/m der Flüssigkeitstransportleitung (9,10) aufzunehmen.

3. Leitungssystem nach Anspruch 1 oder 2,
**dadurch gekennzeichnet, dass**
an beiden Enden des Hüllrohrs (8) eine jeweilige Lagerungsvorrichtung (16) angeordnet ist.

4. Leitungssystem nach einem der Ansprüche 1 bis 3,
**dadurch gekennzeichnet, dass**
innerhalb des Hüllrohrs (8) benachbart zu der wenigstens einen Flüssigkeitstransportleitung (9,10) ein sich in Längsrichtung durch das Hüllrohr (8) erstreckendes Füllmaterial angeordnet ist.

5. Leitungssystem nach einem der Ansprüche 1 bis 4,
**dadurch gekennzeichnet, dass**
das Dichtelement (17) eine sich in Längsrichtung durch dasselbe erstreckende Aussparung (31) aufweist, in welche ein Dichteinsatz (32) passgenau eingesetzt ist.

6. Leitungssystem nach Anspruch 5,
**dadurch gekennzeichnet, dass**
der Dichteinsatz (32) wenigstens eine Bohrung (33,34) zur Durchführung einer Stromleitung (13) und/oder einer Signalleitung (14) aufweist, wobei von der wenigstens einen Bohrung (33,34) ein Schlitz (35,36) zu einer Außenseite des Dichteinsatzes (32) geführt ist, welcher über die gesamte Länge des Dichteinsatzes (32) verläuft.

7. Leitungssystem nach einem der Ansprüche 1 bis 6,
**dadurch gekennzeichnet, dass**
beiderseits des Dichtelements (17) aus einem starren Material bestehende Platten (21,22) angeordnet sind.

8. Leitungssystem nach Anspruch 7,
**dadurch gekennzeichnet, dass**
die Platten (21,22) mittels mehrerer Schraubverbindungen (23) miteinander verbunden sind.

9. Leitungssystem nach Anspruch 8,
**dadurch gekennzeichnet, dass**
die Schraubverbindungen (23) jeweils eine mit der einen Platte (22,21) verbundene Schraube (24), welche durch eine Bohrung (25) in den beiden Platten (22,21) durchgeführt ist, und eine mit der Schraube (24) verbundene Mutter (26) aufweisen.

10. Leitungssystem nach Anspruch 9,
**dadurch gekennzeichnet, dass**
die Schraube (24) einen Abschnitt mit unrundem Querschnitt aufweist, welcher in einer zu dem unrunden Querschnitt komplementären Bohrung der Platte (22) untergebracht ist.

11. Leitungssystem nach einem der Ansprüche 7 bis 10,
**dadurch gekennzeichnet, dass**
wenigstens eine der Platten (21,22) zweiteilig mit einem Mittelteil (37) und einem den Mittelteil (37) umgebenden Ring (38) ausgebildet ist.

12. Leitungssystem nach einem der Ansprüche 1 bis 11,
**dadurch gekennzeichnet, dass**
am Außenumfang des Hüllrohrs (8) wenigstens ein Versteifungsring (28) angeordnet ist.

13. Leitungssystem nach Anspruch 12,
**dadurch gekennzeichnet, dass**
das Hüllrohr (8) wenigstens eine Nut (29) aufweist, in welcher der wenigstens eine Versteifungsring (28) angeordnet ist.

14. Leitungssystem nach Anspruch 12 oder 13,
**dadurch gekennzeichnet, dass**
der wenigstens eine Versteifungsring (28) mehrere seinen inneren Kontur verkleinernde Verdickungen (42) aufweist.

15. Leitungssystem nach Anspruch 7 bis 14,
**dadurch gekennzeichnet, dass**
eine äußere der Platten (21,22) mittels mehrerer Verbindungselemente (43) mit dem Hüllrohr (8) verspannt ist.
